# EUROPEAN PATENT APPLICATION

(11) **EP 3 651 176 A1**
(43) Date of publication of application: **13.05.2020**
(21) Application number: 18380013.5
(22) Date of filing: 12.11.2018
(51) Int. Cl.: H01H 21/02, H01H 21/04, H01H 21/26, H01H 13/52, H01H 13/38

(54) **SWITCH**

(71) Applicant: Simon, S.A.U., 08013 Barcelona (ES)
(72) Inventor: Vázquez Villà, Francesc Xavier, 08013 Barcelona (ES); Rodríguez Martínez, Ana Belén, 08013 Barcelona (ES); Baca Cansino, Pablo, 08013 Barcelona (ES); Gómez Lambo, Francisco Alejandro, 08013 Barcelona (ES); Faúndez Barroso, David, 08013 Barcelona (ES)
(74) Representative: Stiebe, Lars Magnus

(57) **Abstract**

Switch (1) comprising a base tray (B) and a cover (T), the base tray (B) and the cover (T) being mutually articulated by a hinge (H, HT, HB) or by a guide (G), the base comprising a microswitch (MS) having an activation force (*F_{ac}*), which comprises a lever (L) attached to the cover (T), the lever (L) being provided with a free end (L1) arranged such that it coincides with the microswitch when the base tray (B) is pushed towards the cover (T). The switch can be either a rocker switch, a push button or a push switch.

## Description

### TECHNICAL FIELD

This invention is related to the switches, more especially of the rocker or push button switches for walls and the like, generally provided with a tilting or translation cover that usually has the size of the order of the size of the hand.

### STATE OF THE ART

Known are the switches destined to be fixed to the wall, which generally consist of a cover/lid articulated with respect to a base, so that between them there is a hinge that allows rotation, or a guide that allows translation. The cover is an element that is pressed by the user, and in modern rocker switches it is dimensioned so that it has a size of the order of the dimensions of the fingers or of the hands, so that it is ergonomic.

In the traditional switches the mechanism that allows closing and opening an electrical circuit is located behind the cover. Users are used to a short percussive sound when the switch is operated, so that it is a sound indication that the switch has been activated. In particular, it is a sought-after sound, since it is intended that in any switch, either translational or rotation (rocker), the noise is audible. Users do not appreciate a switch that does not make noise (unless it is destined to special applications), since it produces a strange feeling or even seems to have broken down.

However, in modern electrical networks, for example for the domestic sector, there is a tendency to convert the switches into intelligent units which, in terms of opening and closing an electrical circuit, only perform the sensor function. In other words, in these networks the switch is not electrically connected to the electrical circuit to be controlled, but is only there as an indirect activator, generally by means of a sensor.

Therefore, for activation at the switch level, only electronic components, much smaller, are necessary, since they operate with currents and voltages generally of orders of much lower magnitude. For this reason, in the case of a switch, microswitches are used, which consist of a small metallic strip arranged behind a flexible plastic membrane. A typical microswitch has a size of 1 mm approximately.

In order to use these microswitches as switches in a wall switch, it is necessary to activate them by means of a cover, identical or similar to the cover of a conventional switch, that is, much bigger, and comprising a mechanism capable of activating the microswitch.

The small strip of the microswitch usually consists of a bistable strap, which when passing from one state to another, emits a small sound similar to that produced for example on the side buttons of a mobile phone.

The inventors of the invention that will be described in the following section have been able to verify that in these devices, the sound made by the combined device of microswitch and cover is barely audible.

Another drawback of the state-of-the-art switches is that their activation is abrupt. If on the one hand that can be positive when it comes to producing a dry sound (a click), sometimes it is an inconvenience that can be considered as not very ergonomic. Specifically, the inventors have found that in many rocker switches of the state of the art, the evolution of the resistance force (against the hand) of the switch key is not progressive, that is to say that abrupt changes of force take place. This fact is especially pronounced in devices based on microswitches in which the activation stroke of the microswitch is very short in relation to the hand movement. Therefore, there is also a need for a device that allows the greatest possible progressivity, that is, a behavior that is not abrupt and with minimum possible force gradients.

Another additional problem encountered with the fact that the activation is abrupt, that is to say that its corresponding stroke is much smaller than the stroke of the manual actuator, is that the manufacturing and assembly tolerances are very demanding. It must be taken into account that the articulated parts may have other intermediate components, such as embellishers, which lead to a sum of tolerances. If the activation stroke is short in relation to the tolerances, deviations in the manufacturing and assembly processes can lead to an operational assembly not being achieved, that is to say that the switch must be pressed very hard to turn on, or even impossible to activate since the switch has a limited stroke, or the other way around, that is activated at the slightest contact, or that could remain permanently activated, which would be antiergonomic. This is another problem that is intended to be solved with the present invention.

### DESCRIPTION OF THE INVENTION

For overcoming the mentioned drawbacks and achieve the aforementioned aims, the present invention proposes a switch comprising a base tray and a cover, the base tray and the cover being mutually articulated by a hinge or by a guide, the base comprising a microswitch having an activation force, the switch comprising a lever attached to the cover, the lever being provided with a free end arranged such that it coincides with the microswitch when the base tray is pushed towards the cover.

With this structure the drawbacks of the previous devices are solved. At the moment of the activation, the lever is on one side in contact with the cover and on the other with the microswitch. Therefore, at the moment of the activation of the microswitch, a vibration is generated that is transmitted along the lever to the cover itself to which it is rigidly attached, whereby the small vibration produced in the microswitch, that is barely audible, is amplified by the cover. In other words, the cover acts as an amplifier, generating a sound that is perfectly audible to the user.

In some embodiments, the base tray and the cover are mutually articulated by a hinge whose axis coincides with a side of the base tray and one side of the cover, the free end of the lever being arranged at the same distance from the axis as the microswitch. This is the particular of the invention applied to a rocker switch.

In some embodiments, the base tray and the cover are mutually articulated by a guide, that guides the base tray and cover mutually in accordance with a movement of translation that separates or moves them closer.

In some embodiments, the base tray, the cover and the lever are arranged such that the following sequence is obtained:
- an initial configuration wherein the free end of the lever is in contact with the microswitch and in which the lever is in a state of minimum or no tension;
- a displacement that brings the lever from the initial configuration to a maximum tension configuration wherein which the force applied by the free end of the lever on the microswitch is equal to the activation force;
- activation of the microswitch that causes elastic energy accumulated therein to be released that causes a vibration of the lever and a transmission of this vibration to the cover.

Therefore, as in classic witches, the activation, and the amplified noise that accompanies it, will occur at an intermediate moment of rotation (in the case of a rocker switch) or translational movement (in the case of a push button) between their extreme positions.

In some embodiments, the lever is integrally formed with the cover. Like many other features of the present invention, it is a feature that can be molded with one of the parts, which adds no cost, only mold complexity.

In some embodiments, the cover comprises a V-shaped through groove, such that the groove defines the lever.

In some embodiments, the lever is constituted by two converging arms joined to form the free end of the lever.

In some embodiments, the switch comprises stop means for limiting the maximum separation between the base tray and the cover. In the case of a rocker switch, the separation is represented by the opening angle of the hinge. In the case of a push button were the cover is linearly guided with respect to the base, the stop means limit the maximum distance between cover and tray.

In some embodiments, the stop means comprise hooks integrally formed with the tray and hooks integrally formed with the cover.

In some embodiments, the switch comprises a receptacle for a button cell, the receptacle consisting of a portion of the tray and a battery cover articulated with the tray by means of a hinge, the tray and the battery cover being provided with mutual locking means.

In some embodiments, the cover comprises an opening for accessing the battery cover.

In some embodiments, the opening for accessing the battery cover has a shape complementary to the battery cover, so that the cover and the battery cover present continuity when they are mutually fitted.

In some embodiments, the tray comprises lighting sources arranged to illuminate towards an edge of the tray, reflectors integrally formed with the tray arranged close to the edge of the tray, and openings for the output of the light reflected in the reflectors.

In some embodiments, the switch comprises a prism arranged to conduct light from each light source to each opening.

In some embodiments, considering the reflector projected on the symmetry plane of reflective surface, the projection of the reflecting surface of the reflector according to the direction from the light source to the reflector coincides with the section of the beam of light that goes from the light source to the reflector, and the projection of the reflecting surface of the reflector according to the direction normal to the opening coincides with the section of the opening.

In some embodiments, the reflecting surfaces of the reflector have a reflective coating.

In some embodiments, the base tray and the cover are made of a molded plastic material.

In some embodiments, the lever works as a spring that pushes the tray away. Therefore, no additional spring is necessary. This is due to the fact that the lever is always in contact with the microswitch MS, when the switch is on its mounted configuration, so the spring function that pushes the tray away after the activation of the switch is due to the liberation of elastic force accumulated in the lever when the external force applied by an user stops.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Figure 1 shows in perspective the cover provided with the lever.
Figure 2 shows in perspective the tray to which the cover is attached to constitute the rocker switch.
Figures 3 and 4 are like figures 1 and 2, but from another perspective.
Figure 5 shows the cover from below.
Figure 6 shows the PCB from below.
Figure 7a shows the start of the activation process by a user.
Figure 7b shows an intermediate stage, in which the force necessary to activate the microswitch has been reached.
Figure 7c shows the moment of activation, in which the strip of the microswitch changes its configuration, generating a vibration that propagates through the lever and then through the cover, to become audible.
Figure 7d shows the end of the movement.
Figure 8 is a graph showing the evolution of the force as a function of the angle.
Figure 9a shows the cover from above.
Figure 9b shows the cover on the side through which the lever protrudes.
Figure 9c is a side view showing how the lever protrudes.
Figure 9d is a side view from a major side.
Figures 10 to 12 show different perspectives of the rocker switch, at a non-operating angle, to be able to appreciate the interior.
Figure 13 shows in detail a section of the device in the vicinity of one of the edges, so that the arrangement of a prism or light guide that carries light from the led to the opening, passing through the reflector can be seen.
Figure 14 shows the optimal arrangement of the reflector.
Figure 15 shows a suboptimal arrangement in which part of the beam is unusable.
Figure 16 shows a suboptimal arrangement in which part of the opening does not transmit light.
Figure 17 is a schematic representation of an embodiment where the switch is a push button or push switch.

### DESCRIPTION OF A WAY OF CARRYING OUT THE INVENTION

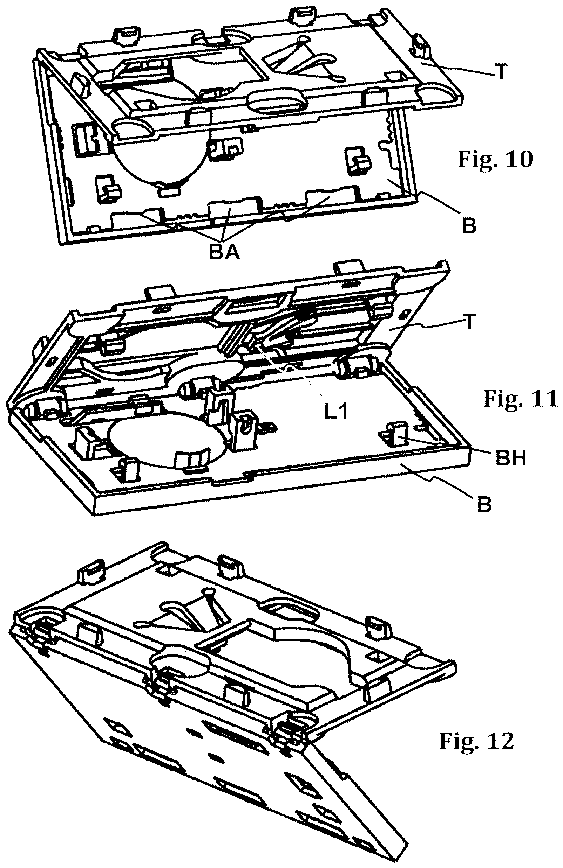

Figs. 10 to 12 show a rocker switch 1 comprising a base tray B and a cover T. This basic unit is what will constitute the rocker switch. In general, it can be foreseen that any of the tray or the cover T constitute the mobile part that will be pressed, preferably with the interposition of an embellisher. Now, in the embodiment that will be illustrated below, the rotating mobile element will be the tray, the cover T being fixed to a base fixed in turn to the wall.

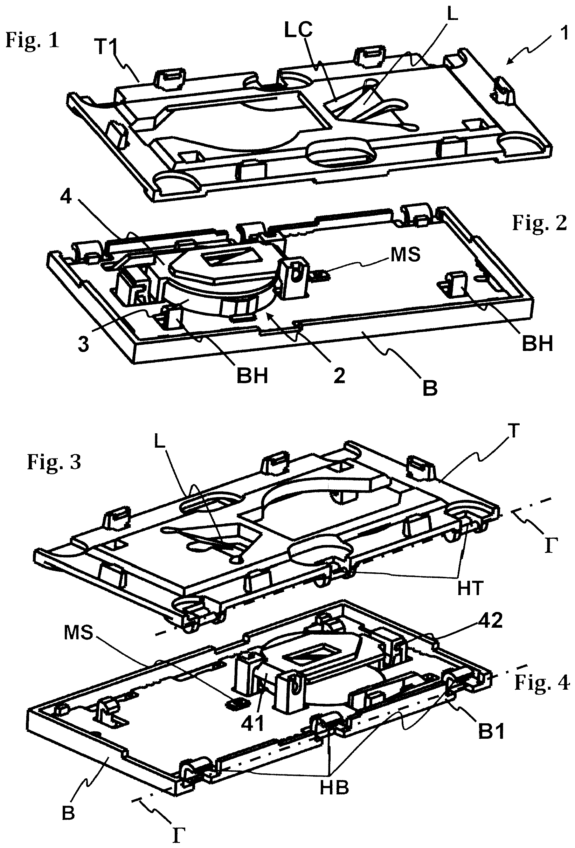

Therefore, the base tray B and the cover T are hinged together by a hinge H, made in turn of a part HT belonging to the cover T and a part HB belonging to the tray, as shown in figures 3 and 4. As also shown in these figures, the axis Γ of the hinge H coincides with a side B1 of the base tray B and one side T1 of the cover T. The parts HT and HB consist of axis and hooks for engaging the axis. In the embodiment shown the axis are part of the cover T and the hooks are part of the tray T. Obviously, the arrangement could be inverted.

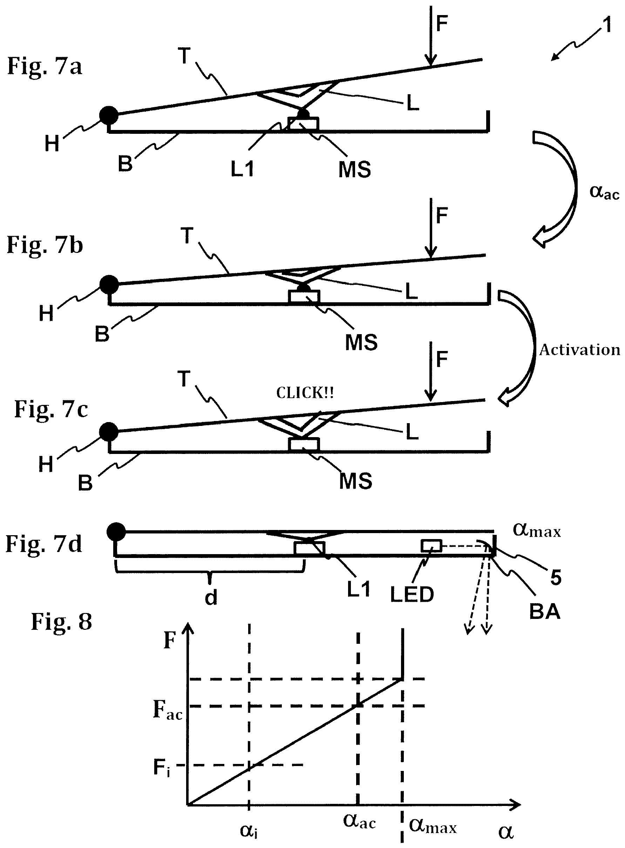

The base tray B houses a PCB which comprises a microswitch MS. The microswitches generally comprise a small metallic strip, that changes its curvature from convex to concave (viewed form the side where the force is applied) when an activation force *F_{ac}* is reached. F is represented as a force applied at a certain point of the cover T. Therefore, the force received by the microswitch will be a force proportional to said force, according to the ratio of distances to the axis of rotation. The graph of figure 8 can refer either to the force F represented, or to the force applied on the microswitch.

According to the invention, the switch comprises a lever L attached to the cover T, the lever L being provided with a free end L1 arranged at the same distance d from the shaft Γ as the microswitch MS. Therefore, when the user presses the cover T, the free end L1 of the lever L will press the microswitch MS.

Preferably, and represented in figure 8, the base tray B, the cover T and the lever L are arranged such that the following sequence is obtained:
- an initial configuration *αᵢ*, shown in Fig. 7a, wherein the free end L1 of the lever L is in contact with the microswitch MS and in which the lever L is in a state of minimum or no tension;
- an angular displacement *α_{ac}*, that brings the lever L from the initial configuration *αᵢ* to a maximum tension configuration *α*ₘₐₓ wherein the force applied by the free end L1 on the microswitch MS is equal to the activation force *F_{ac}*;
- activation of the microswitch MS that causes a change on its geometry, thus releasing a pressure wave transmitted to the lever, in turn causing its vibration, and a transmission of this vibration to the cover T, thus making the activation audible to a user.

As shown in the figures, the lever L is integrally formed with the cover T. This is the preferred option, since the transmission of the vibration will be optimal, since the cover T and the lever L are intimately joined. Another obvious advantage is that the lever L and the cover T can be molded jointly.

In the embodiment shown, the lever L is obtained by providing a V-shaped through groove LC in the cover T, such that the groove LC defines the lever L.

The inventors have also found that a lever L constituted by two converging arms L2, L3 joined to form the free end L1 of the lever L has a great performance for transmitting the vibration coming from the microswitch, and thus for amplifying the sound.

The arrangement according to the invention consists in that the element acting on the microswitch is a lever L that can be elastically deformed with respect to the cover T to which it is attached. In the known devices, the cover comprises a spring associated to the tray that maintains the open distance between the cover and the tray, also due to the assembly tolerances is normal that the element of pressure that actuates the microswitch and the microswitch are not in contact in the rest position of the assembled switch, and therefore the user needs to apply a light force to bring the element pressure that actuates the microswitch in contact with the microswitch and to cancel the spring force. This force is smaller than the force needed to activate the microswitch, so the user notices a very pronounced pressure increase in a very short time, which is antiergonomic, since the activation of the switch occurs in two phases, one in which the element of pressure on the microswitch neither touches it, and another in which it comes into contact and acts suddenly.

However, according to the present invention, the lever L is in contact with the microswitch in the switch rest assembled position, and has an elasticity that allows accumulating energy throughout the whole activation course, as shown in FIG. 8. The Lever L also allows the lack of a spring that keeps the cover and tray opened. In other words, when pressing the switch, the user accumulates the elastic energy in the lever L during the entire movement. Upon reaching the activation force Fac, the lever L has accumulated enough energy to activate the microswitch MS. Therefore, the activation is smoother and more ergonomic thanks to the characteristics of the present invention.

Another problem solved with the invention is that related to manufacturing and assembly tolerances. In many cases, there is not physical contact between the components, as the element of pressure and the actuator or microswitch, which provides a feeling of several force levels when actuating the switch. By providing an activation lever L which is already pressing the microswitch MS from the first moment, it is possible to decrease the requirements with regard to manufacturing and assembly tolerances. The requirements are further decreased thanks to the reduced number of components involved in the activation, just the cover T, the tray B and the lever L. In other words, since the lever L has a certain elasticity, the tray B and the cover T can be arranged so that the initial configuration of the lever already has a certain preload, and so that the user already senses a minimum force Fi to start the movement (rotation or pushing of the key). Referring to figure 8, in this graph the origin of coordinates would correspond to the first contact between lever L and microswitch MS. But it could occur that tolerances lead to a situation where the contact is not effective until a certain angle have been reached. But taking advantage of the fact that the lever L is an elastic element, the rocker switch 1 can be mounted so that when it is delivered, the angle α that represents the advance of the cover T towards the tray B (not the angle formed therebetween obviously, which would decrease accordingly) has already been advanced sufficiently to a value αi in which an initial Fi force is obtained. To achieve this initial configuration, the hooks LH are available, which are dimensioned so that in their retention configuration this Fi force appears. Obviously, once mounted, the angles comprised between 0 and αi are only possible before the mutual engagement of the hooks, that is before assembling.

It should also be noted that Figure 8 is an idealization and that it has a purely explanatory purpose. In reality, the curve is not exactly straight, but is an estimation for small angles, and in particular it will happen that in the small interval of angles just at the activation angleα_{ac}, there is a slight concavity or inflection in the curve, which corresponds to the moment in which the metallic microstrip of the microswitch MS goes from the open (convex) configuration to the closed (concave) configuration. Now, just after this moment, which corresponds to the 'CLICK!', the ascending curve shown in Figure 8 is retaken.

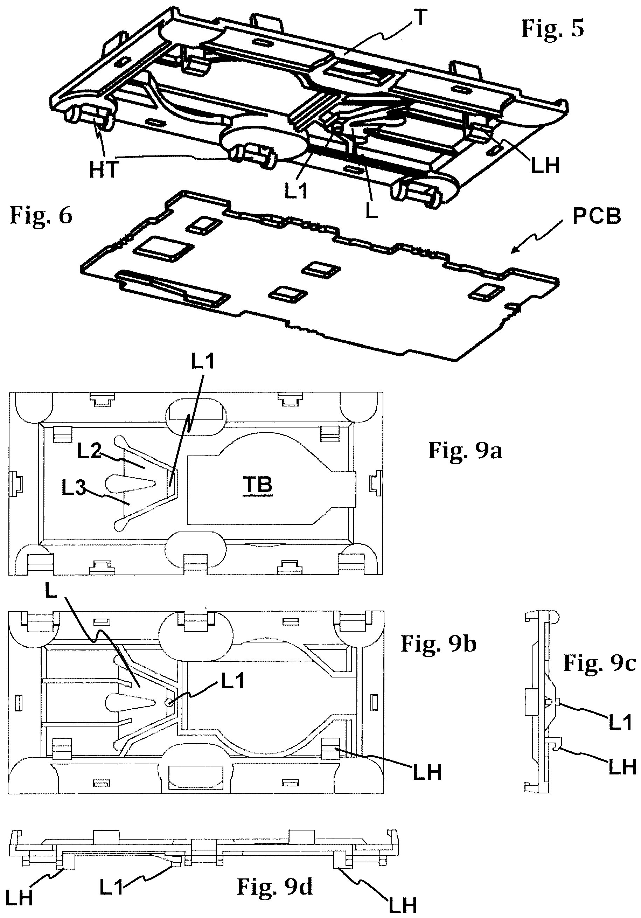

As shown for example in figures 5 and 11, the rocker switch 1 comprises stop means BH, LH for limiting the maximum opening angle of the hinge H. These stop means BH, LH are composed by hooks BH integrally formed with the tray and hooks LH integrally formed with the cover T. Therefore, this is another advantageous feature of the invention that can be molded with the main components.

The rocker switch 1 according to the invention is specially designed to constitute an intelligent component for control in electrical installations, whereby the PCB, apart from the microswitch, can comprise other electronic components, such as a microprocessor, a remote communication unit or LED lighting sources, as will be seen below.

Therefore, in the embodiment shown, for example in figure 2, the rocker switch comprises a receptacle 2 for a button cell 3. This receptacle 2 consists of a portion of the tray B and a battery cover 4 articulated with the tray B by means of a hinge 41, the tray B and the battery cover 4 being provided with mutual locking means 42, in the form of hooks.

As shown for example in figure 9a, the cover T comprises an opening TB for accessing the battery cover 4 having a shape complementary to the battery cover 4, so that the cover T and the battery cover 4 present continuity when they are mutually fitted, thus resulting in a more compact switch.

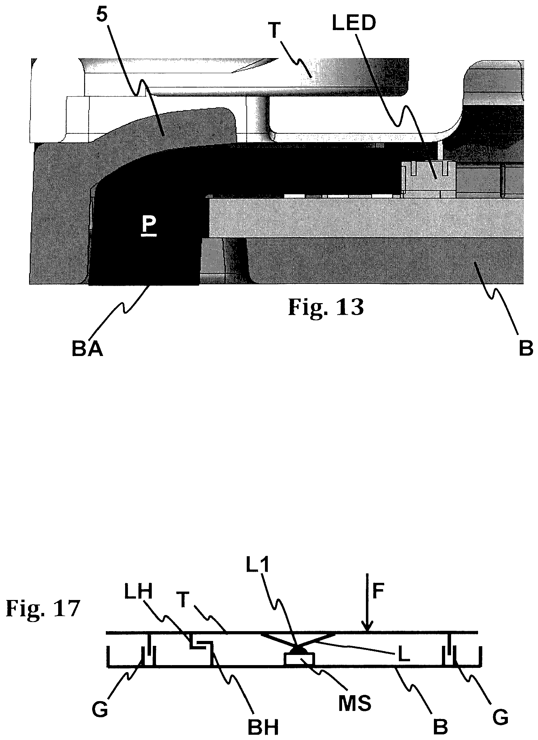

According to another preferred aspect, which can constitute a separate invention per se, the PCB comprises lighting sources LED arranged to illuminate towards an edge of the tray B, reflectors 5 integrally formed with the tray B arranged close to the edge of the tray B, and openings BA for the output of the light reflected in the reflectors 5 as shown in figure 13. Therefore, this is another feature that can be molded jointly with the tray, without the need of adding more components.

Therefore, here it is disclosed a rocker switch 1 comprising a base tray B and a cover T, the base tray B and the cover T being hinged together by a hinge H, HT, HB whose axis Γ coincides with a side B1 of the base tray B and one side T1 of the cover T, and wherein the tray B comprises lighting sources LED arranged to illuminate towards an edge of the tray B, reflectors 5 integrally formed with the tray B arranged close to the edge of the tray B, and openings BA for the output of the light reflected in the reflectors 5. These reflectors are preferably in the form of a curved or planar tab, arranged in the vicinity of the edge.

The objective of these reflectors 5 is to provide, through the openings BA, indirect illumination, only intended to inform about the state of the rocker switch 1, for example activated or not activated. Therefore, the direct light of the LEDs, which can become annoying, is avoided in order to obtain a dim and diffuse light. As already said, the tray B in the illustrated embodiments is the part of the rocker switch 1 that will be more external with respect to the wall, and therefore will be the mobile part, through which the light coming from the LEDS will come out. This tray will be provided on top of an embellisher having a thickness adequate so that an adequately attenuated LED light is visible from the outside.

The LED system can also comprise a prism P arranged to conduct light from each light source LED to each opening BA. Also, the PCB could have a single prism, having a single input end coinciding with a single LED, branched by way of many outputs, one for each opening BA.

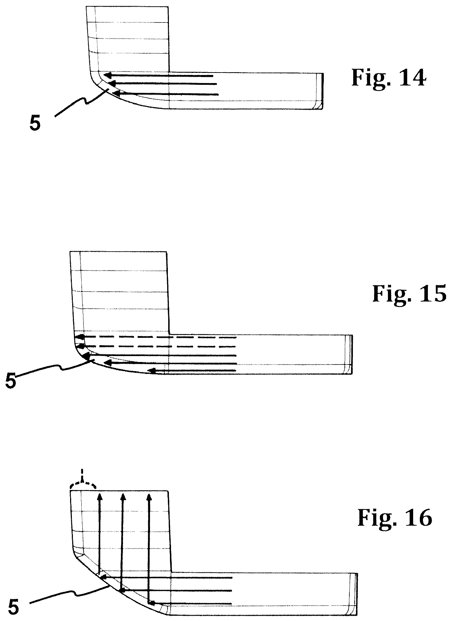

In the embodiment shown in Fig. 14, considering the reflector projected on a symmetry plane of the reflective surface, as represented in figures 13 to 16, the projection of the reflecting surface of the reflector 5 according to the direction from the light source LED to the reflector coincides with the section of the beam of light that goes from the light source LED to the reflector 5, and the projection of the reflecting surface of the reflector 5 according to the direction normal to the opening BA coincides with the section of the opening BA. This is the optimal way to reflect the light. As shown in figure 15, if the reflecting part is too short, a portion of the light beam coming from the LED is reflected back, instead of being reflected. This would be therefore a suboptimal arrangement. Another suboptimal arrangement is produced if the reflector is arranged as shown in Figure 16, which produces a band of the opening BA without light, thus producing a poor aesthetics.

It should be noted that the rocker switch described here has a lot of functions, but it only consists of four parts, the tray B, the cover T, the battery cover 4 and the PCB. No other components are needed.

Fig. 17 shows another embodiment of the invention, where the base tray B and the cover T are mutually articulated by a guide G, that guides the parts mutually in accordance with a movement of translation that separates or moves them closer.

It should be noted that in all the embodiments the lever L has another function, specifically the function as a spring that pushes the tray B away, and therefore no additional spring is necessary, this is due to the fact that the lever L is always in contact with the microswitch MS when the switch is on its mounted configuration, so the spring function that pushes the tray B away after the activation of the switch is due to the liberation of elastic force accumulated in the lever when the external force applied by an user stops.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. Switch (1) comprising a base tray (B) and a cover (T), the base tray (B) and the cover (T) being mutually articulated by a hinge (H, HT, HB) or by a guide (G), the base comprising a microswitch (MS) having an activation force (*F_{ac}*), **characterized in that** it comprises a lever (L) attached to the cover (T), the lever (L) being provided with a free end (L1) arranged such that it coincides with the microswitch when the base tray (B) is pushed towards the cover (T).

2. Switch (1) according to claim 1, wherein the base tray (B) and the cover (T) are mutually articulated by a hinge (H, HT, HB) whose axis (Γ) coincides with a side (B1) of the base tray (B) and one side (T1) of the cover (T), the free end (L1) of the lever (L) being arranged at the same distance (d) from the axis (Γ) as the microswitch (MS).

3. Switch (1) according to claim 1 or claim 2, wherein the base tray (B), the cover (T) and the lever (L) are arranged such that the following sequence is obtained:
- an initial configuration (*αᵢ*) wherein the free end (L1) of the lever (L) is in contact with the microswitch (MS) and in which the lever (L) is in a state of minimum or no tension;
- a displacement (*α_{ac}*) that brings the lever (L) from the initial configuration (*αᵢ*) to a maximum tension configuration (*α*ₘₐₓ) wherein which the force applied by the free end (L1) on the microswitch (MS) is equal to the activation force (*F_{ac}*);
- activation of the microswitch (MS) that causes a change on its geometry releasing a pressure wave transmitted to the lever causing the vibration of the lever (L) and then a transmission of this vibration to the cover (T).

4. Switch (1) according to any of the previous claims, wherein the lever (L) is integrally formed with the cover (T).

5. Switch (1) according to claim 3, the cover (T) comprises a V-shaped through groove (LC), such that the groove (LC) defines the lever (L).

6. Switch (1) according to any one of the previous claims, in which the lever (L) is constituted by two converging arms (L2, L3) joined to form the free end (L1) of the lever (L).

7. Switch (1) according to any of the preceding claims, comprising stop means (BH, LH) for limiting the maximum separation between the base tray (B) and the cover (T).

8. Switch (1) according to claim 7, in which the stop means (BH, LH) comprise hooks (BH) integrally formed with the tray and hooks (LH) integrally formed with the cover (T).

9. Switch (1) according to any of the preceding claims, which comprises a receptacle (2) for a button cell (3), the receptacle (2) consisting of a portion of the tray (B) and a battery cover (4) articulated with the tray (B) by means of a hinge (41), the tray (B) and the battery cover (4) being provided with mutual locking means (42),

10. Switch (1) according to claim 9, wherein the cover (T) comprises an opening (TB) for accessing the battery cover (4), the opening (TB) for accessing the battery cover (4) having preferably a shape complementary to the battery cover (4), so that the cover (T) and the battery cover (4) present continuity when they are mutually fitted.

11. Switch (1) according to any one of the preceding claims, wherein the tray (B) comprises lighting sources (LED) arranged to illuminate towards an edge of the tray (B), reflectors (5) integrally formed with the tray (B) arranged close to the edge of the tray (B), and openings (BA) for the output of the light reflected in the reflectors (5).

12. Switch (1) according to claim 11, which comprises a prism (P) arranged to conduct light from each light source (LED) to each opening (BA).

13. Switch (1) according to any of claims 11 or 12, wherein the projection of the reflecting surface of the reflector (5) according to the direction from the light source (LED) to the reflector coincides with the section of the beam of light that goes from the light source (LED) to the reflector (5) at any plane contained by the reflector, and the projection of the reflecting surface of the reflector (5) according to the direction normal to the opening (BA) coincides with the section of the opening (BA).

14. Switch according to any of claims 11 to 13, wherein the reflecting surfaces of the reflector (5) have a reflective coating.

15. Switch according to any of the previous claims, wherein the base tray (B) and the cover (T) are made of a molded plastic material.
